# EUROPÄISCHE PATENTSCHRIFT

(11) **EP 0 356 845 B1**
(45) Veröffentlichungstag und Bekanntmachung des Hinweises auf die Patenterteilung: **05.03.1997**
(21) Anmeldenummer: 89115316.5
(22) Anmeldetag: 19.08.1989
(51) Int. Cl.: C08G 61/12

(54) **Verfahren zur Herstellung von Polyarylenetherketonen**
Process for preparing poly(arylene ether ketones)
Procédé de préparation de poly(arylène éther cétones)

(30) Priorität: 31.08.1988 DE 3829520
(43) Veröffentlichungstag der Anmeldung: 07.03.1990
(73) Patentinhaber: BASF Aktiengesellschaft, 67063 Ludwigshafen (DE)
(72) Erfinder: Koch, Juergen, Dr., D-6708 Neuhofen (DE); Stegmaier, Wolfgang, Dr., D-6733 Hassloch (DE); Heinz, Gerhard, Dr., D-6719 Weisenheim (DE)

(56) Entgegenhaltungen:
- EP-A- 0 314 384
- DE-A- 3 416 445
- US-A- 3 791 890

## Beschreibung

Die Erfindung betrifft ein Verfahren zur Herstellung von Polyaryletherketonen durch elektrophile Polykondensation in zwei Reaktionszonen.

Polyarylenetherketone sind hochwertige Thermoplaste, die sich durch besonders hohe Temperaturbeständigkeit, hohe Zähigkeit, sehr gute mechanische Eigenschaften und Resistenz gegenüber Chemikalien und Lösungsmitteln auszeichnen.

Polyarylenetherketone können entweder durch nucleophile oder durch electrophile Substitutionsreaktion hergestellt werden.

Bei der electrophilen Polykondensation werden entweder
a) ein Monomerengemisch aus einem aromatischen Dicarbonsäurechlorid oder Phosgen und einem mehrkernigen Aromaten mit austauschbaren Wasserstoffatomen oder
b) ein mehrkerniges aromatisches Säurechlorid mit einem reaktiven Wasserstoffatom
in Gegenwart eines Friedel-Crafts-Katalysators umgesetzt. Nach US 3 441 538, US 3 953 400 und US 3 956 240 wird mit Bortrifluorid in Fluorwasserstoff als Lösungsmittel gearbeitet.

Nach WO 84/03892 kann in weniger aggressiven Lösungsmitteln, z.B. Methylenchlorid oder Dichlorethan gearbeitet werden, wenn eine Lewis-Säure, z.B. Aluminiumtrichlorid, vorzugsweise zusammen mit einer Lewis-Base, z.B. Lithiumchlorid oder Dimethylformamid, als Katalysator eingesetzt wird.

Diese Verfahrensvariante vermeidet den Umgang mit HF und BF₃, erlaubt die Durchführung der Polykondensation bei niedrigen Temperaturen und liefert eine gelartige Reaktionsmasse, die einfacher handzuhaben ist als die harten Reaktionsprodukte, die entstehen, wenn ohne eine Lewis-Base gearbeitet wird.

Die Polykondensation wird so durchgeführt, dar die Ausgangsverbindungen nacheinander zu einer gerührten und temperierten Suspension von Aluminiumchlorid in dem Lösungsmittel zugegeben werden. Die Polykondensationsreaktion führt zu einem starken Viskositätsanstieg.

Bei der Übertragung des Verfahrens in den technischen Maßstab hat es sich gezeigt, daß die Reaktionsmasse in vielen Fällen so hochviskos wird, daß sie nicht mehr gerührt und aus dem Reaktor ausgetragen werden kann.

Gemäß der US 37 91 890 wird das Problem gelöst indem der Polymer-Katalysator-Komplex in einem beheizten Medium dekomplexiert wird, gleichzeitig wird die Reaktion zu Ende geführt.

Der Erfindung lag also die Aufgabe zugrunde, das bekannte Verfahren so zu verbessern, daß die entstehende Reaktionsmasse auch beim Arbeiten in technischem Maßstab noch handhabbar ist.

Ein ähnliches Verfahren ist in der EP 314 384 offenbart, ein Dokument, das jedoch nur im Sinne von Art. 54(3) EPÜ relevant ist.

Es wurde gefunden, daß diese Aufgabe gelöst wird, wenn man die Polykondensation in zwei Reaktionszonen durchführt, wobei das Reaktionsgemisch in der ersten Zone unter Rühren bis zu einer Viskosität von maximal 2000 mPa·s polykondensiert wird, und anschließend durch eine zweite, vertikale Zone in einer Pfropfenströmung mittels Gasdruck befördert und dabei weitgehend adiabatisch fertig polykondensiert wird.

Die einzelnen Komponenten des Reaktionsgemisches sind ausführlich in WO 84/03892 beschrieben, auf die ausdrücklich verwiesen wird.
A. Bevorzugte Monomer-Systeme A sind:
   a1) Terephthaloylchlorid und 4,4'-Diphenoxybenzophenon, was zu einem Polyaryletherketon der Struktur 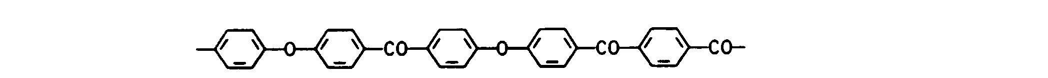 führt,
   a2) Terephthaloylchlorid und 1,4'-Diphenoxybenzol, welches zu 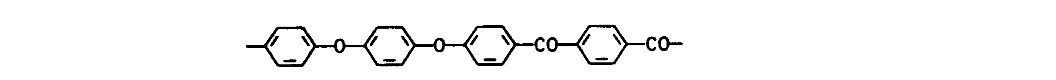 führt,
   a3) Terephthaloylchlorid und 1,4-Bis(phenoxybenzoyl)benzol, welches zu 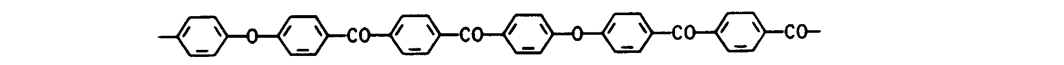 führt.
      Das aromatische Dicarbonsäurechlorid und der mehrkernige Aromat werden in im wesentlichen äquimolaren Mengen eingesetzt, wobei geringe Abweichungen zulässig sind, um eine gezielte Einstellung des Molekulargewichts zu bewirken.
   b) Die Polykondensation von p-Phenoxybenzoylchlorid mit sich selbst führt zu 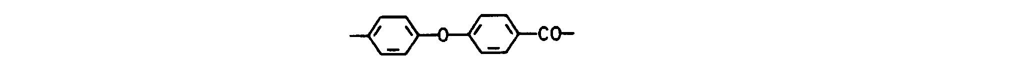
   c) Monofunktionelle Reagentien zum Kettenabbruch sind z.B. Benzoylchlorid und p-Phenoxybenzophenon.
      Sie sind insbesondere bei der Polykondensation der Monomeren b) für die gezielte Einstellung des Molekulargewichts wichtig; darüberhinaus dienen sie auch zur Stabilisierung der Polymeren in der Schmelze. Sie werden im allgemeinen in Mengen von 1 bis 10 Mol%, bezogen auf die Monomeren a) bzw. b) eingesetzt.
B) Bevorzugte Lewis-Säure ist Aluminiumchlorid, daneben sind auch Aluminiumbromid, Antimonpentachlorid, Bortrifluorid, Zinkchlorid, Eisen-(III)-chlorid, Titantetrachlorid und Zinn-(II)-chlorid geeignet. Sie werden in einer Menge von mindestens einem Mol pro nucleophile Gruppe im Reaktionsgemisch eingesetzt, wobei ein geringer Überschuß, vorzugsweise 5 bis 30 Mol% anzuwenden ist, der ausreichend ist, die Polykondensationsreaktion zu katalysieren.
C) Das Reaktionsgemisch enthält vorzugsweise eine Lewis-Base, z.B. Alkalihalogenide, wie LiCl oder NaCl, ferner polare organische Verbindungen, wie N-Methylpyrrolidon, N,N-Dimethylformamid, 1-Methyl-2-pyrrolidon, Dimethylsulfon, Diphenylsulfon, Tetramethylensulfon (Sulfolan), Dimethylsulfid, Imidazol, Benzophenon und Trimethylamin. Bevorzugt sind LiCl und Dimethylsulfon. Sie werden in Mengen von 0,01 bis 4 Mol pro Mol an Säuregruppen eingesetzt.
D) Als inerte Lösungsmittel kommen in Frage: Methylenchlorid, o-Dichlorbenzol, 1,2,4-Trichlorbenzol, 1,2-Dichlorethan, 1,1,2,2-Tetrachlorethan.

Die Polykondensation wird üblicherweise bei Temperaturen zwischen -70 und +150°C durchgeführt. Zweckmäßigerweise startet man sie in der ersten Reaktionszone bei tiefen Temperaturen, z.B. zwischen -50 und -10°C, und läßt dann auf z.B. -30 bis +30°C ansteigen. Die gesamte Reaktion sollte zumindest unter leicht erhöhtem Druck, zweckmäßigerweise über 1,1 bar und insbesondere zwischen 2 und 10 bar, durchgeführt werden, um ein Entweichen des gebildeten Chlorwasserstoffs und damit ein Aufschäumen zu verhindern. Dies ist auch beim Übergang von der ersten in die zweite Reaktionszone zu beachten. Zur Überführung des Vorpolymerisats vom gerührten Vorreaktor in den Nachreaktor ist es zweckmäßig, daß im Vorreaktor ein höherer Druck eingestellt wird als im Nachreaktor. Es kann gegebenenfalls sinnvoll sein, während des Eintrags von Vorpolymerisat in den Nachreaktor den Druck in diesem etwas abzusenken. Der Druck sollte jedoch nicht soweit abgesenkt werden, daß die Reaktionsmasse aufschäumt.

Das Mischen der flüssigen und festen Reaktionskomponenten und die Vorpolymerisation erfolgt in der ersten Reaktionszone unter Rühren, zweckmäßigerweise in einem gekühlten Rührkessel, der vorteilhaft aus einer korrosionsbeständigen Legierung, z.B. Hastelloy, besteht. Der Anfangswert der Viskosität liegt bei etwa 0,5 mPa·s. Man polykondensiert in der ersten Reaktionszone solange, bis die Viskosität auf 20 bis 2000, vorzugsweise auf 50 bis 200 mPa·s angestiegen ist. Im Falle der Polykondensation von Terephthaloylchlorid mit Diphenoxybenzophenon dauert dies etwa 15 bis 25 min ab Zugabe des letzten Monomeren.

Das Vorpolymerisat wird dann unmittelbar in die zweite Reaktionszone eingetragen. Dies erfolgt durch Schwerkraft und/oder Inertgasdruck. Die Viskosität beim Überführen des Vorpolymerisates in den Nachreaktor sollte so hoch sein, daß im Nachreaktor das Aluminiumchlorid nicht sedimentieren kann, da sonst kein hochmolekulares Polyetherketon gebildet wird. Sie sollte jedoch noch ausreichend niedrig sein, um ein vollständiges Überführen des Vorpolymerisates in den Nachreaktor zu erlauben.

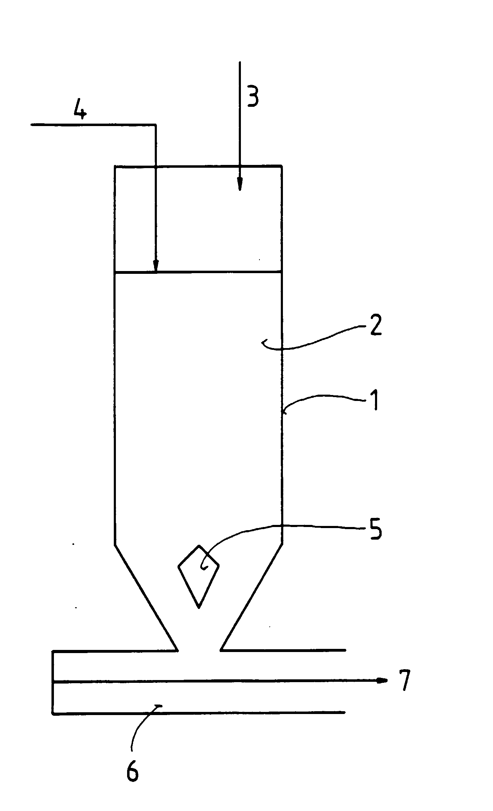

Im einfachsten Fall besteht der Nachreaktor der zweiten Reaktionszone aus einem einfachen Gefäß. Um jedoch das hochviskose Polymerisat bei Anlagen in technischem Maßstab in einer geschlossenen Apparatur handhaben und zur weiteren Aufarbeitung austragen zu können, wird ein vertikaler, zylinderförmiger, ungerührter Rohrreaktor mit einem 1:d-Verhältnis zwischen 2:1 und 10:1 bevorzugt. Die Abbildung zeigt schematisch einen solchen Rohrreaktor. Dieser besteht aus einem Reaktionsrohr (1), welches die Reaktionsmasse (2) enthält. An seinem unteren, konusartigen Ende kann eine Verdrängervorrichtung (5) eingebaut sein. Das Vorpolymerisat (3) wird aus dem Vorreaktor absatzweise in das Reaktionsrohr eingeführt und durch Gasdruck (4) kontinuierlich nach unten befördert. Durch eine Austragshilfe (6) wird das Polymerisat ausgepreßt (7) und kann anschließend zerkleinert werden. Der Rohrreaktor kann in beliebiger Größe gebaut werden, das Verhältnis seines Volumens zum Volumen des Vorreaktors wird entsprechend dem Verhältnis der Verweilzeiten der Reaktionsmasse in den beiden Reaktionszonen konstruiert. Da die Reaktionsmasse mittels Gasdruck durch das Reaktionsrohr befördert wird, weist dieses keine hydraulisch bewegten Teile auf. Das untere Ende des Reaktionsrohres verjüngt sich zweckmäßigerweise konusartig (siehe Abbildung) und endet in einer Austragshilfe. Diese kann aus einem vertikalen oder bevorzugt horizontalen Schneckenaggregat bestehen, durch welches das Reaktionsgut ausgepreßt wird, wobei an der Schnecke eine Lochscheibe angebracht sein kann, wodurch eine Vorzerkleinerung des Reaktionsgutes erreicht wird. Die Austragshilfe kann aber auch eine Zellenradschleuse sein oder ein vertikaler, beweglicher Kolben.

Um eine gleichmäßige Produktqualität, insbesondere hinsichtlich des Polymerisationsgrades zu erreichen, muß die Reaktionsmasse vom Eintrag des Rohrreaktors bis zu dessen Austrag den Rohrreaktor in Form einer Pfropfenströmung durchströmen. Um dies zu gewährleisten sind folgende Maßnahmen von Vorteil:
a) Beschichtung der Innenwand des Rohrreaktors sowie der Zu- und Ableitungen, mit einem gleitfähigen und bezüglich der Reaktionsmasse inerten und antiadhäsiven Material, wie z.B. Polytetrafluorethylen (PTFE), Polyvinylidenfluorid (PVDF), Perfluorethylenpropylen (FEP) oder andere Beschichtungs- oder Auskleidungsbeläge mit entsprechenden Eigenschaften.
b) Einbau einer Vorrichtung am Ende des zylindrischen Bereichs, die vorzugsweise als kegel- oder doppelkegelförmiger Verdränger oder auch als Lochplatte oder als konzentrische Ringe ausgebildet sein kann. Hierdurch wird vermieden, daß im Austragsbereich die Reaktionsmasse nur aus dem Bereich um die Längsachse ausströmt.

Der Nachreaktor besitzt am oberen Ende eine Zuführung für Druckgas, welches drei Aufgaben hat:
a) Inertisierung des Gasvolumens über der Reaktionsmasse.
b) Aufbau eines Druckpolsters, um die Reaktionsmasse am Aufschäumen zu hindern.
c) Bewegen der Reaktionsmasse in Form einer Pfropfenströmung zur Austragshilfe im unteren Teil des Reaktors.

Das Reaktionsrohr ist zweckmäßigerweise mit einem flüssigkeitsdurchströmten Doppelmantel oder einer anderen geeigneten Vorrichtung zum Temperieren versehen.

Die Betriebsweise dieses Reaktors kann, ausgehend von einem bereits mit Vorpolymerisat gefüllten Reaktor, wie folgt beschrieben werden.
A) Mittels Gasdruck, vorzugsweise mit Stickstoff, wird die Reaktionsmasse kontinuierlich in Form einer Pfropfenströmung in Richtung der Austragshilfe im konischen Teil des Reaktors gedrückt. Von dort wird die Reaktionsmasse durch die Austragshilfe in eine nachgeschaltete Aufarbeitungseinheit ausgetragen. Dabei erfolgt eine Vorzerkleinerung.
B) In regelmäßigen Zeitabständen wird das im Rohrreaktor freiwerdende Volumen durch Eintrag von Vorpolymerisat aufgefüllt.
   Im optimalen Fall wird kontinuierlich dieselbe Menge ausgetragen, wie am oberen Ende des Rohrreaktors diskontinuierlich eingetragen wird, so daß die im Reaktor befindliche Menge an Reaktionsgemisch im Mittel konstant bleibt. Die Füllhöhe des Reaktors sollte so sein, daß die Zeit von Eintrag bis zum Austrag ausreichend ist, um das gewünschte Molekulargewicht zu erreichen. Die inhärente Viskosität (gemessen 0,5 g/100 ml in H₂SO₄) des hergestellten Polymeren soll bevorzugt zwischen 0,5 und 1,6 liegen.

Die der nachgeschalteten Aufarbeitungseinheit zugeführte Menge an Reaktionsprodukt kann durch Änderung der Drehzahl der Austragsschnecke in einfacher Weise variiert werden und bleibt über der Zeit weitestgehend konstant. Da in der Austragsschnecke bereits eine Vorzerkleinerung der Reaktionsmasse erfolgt, wird die nachgeschaltete Zerkleinerungseinheit entlastet.

Die Verweilzeit der Reaktionsmasse in der zweiten Reaktionszone liegt im allgemeinen zwischen 3 und 8 Stunden, vorzugsweise zwischen 4 und 5 Stunden.

### Beispiel 1

In einem 2l-Druckgefäß werden 580 g (4.35 Mol) Aluminiumchlorid in 840 ml getrocknetem Methylenchlorid suspendiert und auf unter 0°C gekühlt. Dazu gibt man nacheinander unter Kühlung 112.96 g (1.20 Mol) Dimethylsulfon, 162.42 g (0.8 Mol) Terephthaloylchlorid und 4.05 g (0.029 Mol) Benzoylchlorid. Nach Kühlen auf < -10°C gibt man noch 298.41 g (0.814 mol) 4,4'-Diphenoxybenzophenon zu. Dann wird das Gefäß gasdicht verschlossen und es werden zur Druckhaltung ca. 3 bar Stickstoff aufgepreßt. Unter langsamer Erwärmung erhöht sich die Viskosität innerhalb von ca. 20 Minuten auf 100 mPas. Die Temperatur beträgt dann ca. 18°C. Während dieser Vorkondensationszeit wird der Inertgasdruck im Reaktionsgefäß auf ca. 10 bar erhöht.

Das Volumen des Vorpolymerisates beträgt ca. 1500 ml.

Durch den angelegten Stickstoffdruck wird dann das Reaktionsgemisch innerhalb von 5 Minuten durch das Bodenauslaßventil ausgetragen und über einen druckfesten, innen mit PTFE beschichteten Schlauch in den Nachreaktor überführt.

Die Prozedur wird wiederholt und das gebildete Vorpolymerisat wird in Zeitabständen von einer Stunde in den Nachreaktor überführt.

Der Durchmesser des Nachreaktors beträgt 150 mm, die Länge des zylindrischen Teils ist ca. 500 mm. Das Volumen beträgt damit ca. 8800 cm³. Im Übergang vom zylindrischen in den konischen Teil des Reaktors ist ein doppelkegelförmiger Verdrängerkörper über 3 Stege angebracht. Alle produktberührenden Oberflächen des Rohrreaktors sind mit PTFE beschichtet.

Im unteren, konischen Teil des Nachreaktors ist eine durch einen Elektromotor angetriebene Austragsschnecke aus Hastelloy C4 mit einem Durchmesser von 40 mm angebracht, die senkrecht zur Achse des Reaktionsrohres austrägt. An der Austragsöffnung der Schnecke ist eine Lochplatte mit Bohrungen von 4 mm und einem rotierenden Abstreifer angebracht.

Der Nachreaktor wird so betrieben, daß pro Stunde 1500 ml an ausreagierter Reaktionsmasse ausgetragen wird. Dies ist dieselbe Menge, die diskontinuierlich in Form von Vorpolymerisat in den Nachreaktor eingetragen wird.

Die Temperatur im Nachreaktor beträgt 25°C, der Druck 5 bar und die mittlere Verweilzeit 5 Stunden.

Die Aufarbeitung der ausgetragenen Reaktionsmasse erfolgt mit einer Hammermühle, wobei zur Hydrolyse des Polymer/Aluminiumchlorid-Komplexes 200 l/h Wasser eingedüst wird. Bei einem Durchsatz von 1500 ml Polymerisat Polymer pro Stunde beträgt die Leistungsaufnahme der Mühle 0.6 kW.

Das Polymer wird dann durch mehrfache Extraktion mit Wasser von Katalysatorresten befreit und im Vakuum bei 200°C getrocknet.

Das erhaltene Polymer hat eine inhärente Viskosität von 1.07 (gemessen bei 25°C in konzentrierter Schwefelsäure, 0.5 g/100 ml).

Mit Hilfe der in diesem Beispiel beschriebenen Apparatur ist es auch über eine längere Zeit möglich, einen kontinuierlichen Betrieb von Nachreaktor und Aufarbeitungseinheit aufrecht zu erhalten.

Das entstandene Polymerisat hat die Struktur 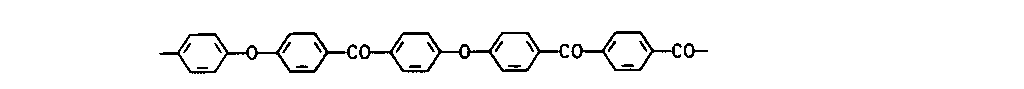 Seine Glastemperatur beträgt 175°C, seine Schmelztemperatur 375°C.

### Beispiel 2

In einem 1 l-Druckgefäß werden 300 ml getrocknetes 1,2-Dichlorethan vorgelegt und auf -30°C gekühlt. Dazu werden nacheinander langsam unter Kühlung 400 g (3 Mol) Aluminiumchlorid, 31.79 g (0.75 mol) Lithiumchlorid und 54.83 g (0.75 Mol) getrocknetes Dimethylformamid gegeben. Nach Rückkühlen auf -20°C wird ein Gemisch aus 167.75 g (0.750 Mol) p-Phenoxybenzoylchlorid, 0.633 g (0.450 Mol) Benzoylchlorid, 1.234 g (0.0450 Mol) p-Phenoxybenzophenon und 130 ml 1,2-Dichlorethan innerhalb von 15 Minuten zugetropft. Dabei wird die Temperatur durch Kühlung auf unter -5°C gehalten. Das Druckgefäß wird dann verschlossen und es wird ein Stickstoffdruck von 5 bar aufgepreßt. Nach ca. 50 Minuten hat sich die Viskosität des Vorpolymerisates auf ca. 100 mPas erhöht. Über das Bodenablaßventil und einen PTFE-ausgekleideten Druckschlauch wird das Vorpolymerisat in den im Beispiel 1 beschriebenen Nachreaktor überführt. Das Volumen des Vorpolymerisates beträgt ca. 700 ml pro Ansatz.

Mit dem Vorpolymerisat wird der Nachreaktor in Zeitabständen von 2 Stunden befüllt. Über den flüssigkeitsdurchströmten Doppelmantel ist der Nachreaktor auf 0°C temperiert. Nachdem der Nachreaktor vollständig gefüllt ist, wird am unteren Ende kontinuierlich eine Polymerisat-Menge von 350 ml pro Stunde ausgetragen. Der Eintrag von frischem Vorpolymerisat wird fortgesetzt. Die ausgetragene Reaktionsmasse wird in einer Hammermühle wie in Beispiel 1 beschrieben aufgearbeitet. Nach mehrfacher Extraktion mit Wasser wird das erhaltene Polymer im Vakuum getrocknet. Die Ausbeute beträgt 84 g pro Stunde.

Das erhaltene Polymer hat die Struktur 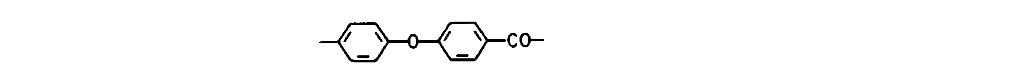 und weist eine Glastemperatur von 165°C und eine Schmelztemperatur von 365°C auf. Die inhärente Viskosität (0.5 g/100 ml in konz. Schwefelsäure, 25°C) beträgt 1.1.

## Patentansprüche

1. Verfahren zur Herstellung von Polyarylenetherketonen durch Friedel-Crafts-Polykondensation eines Reaktionsgemisches, enthaltend
A. ein Monomersystem aus
(a) (1) einem aromatischen Dicarbonsäurechlorid oder Phosgen und (2) einer im wesentlichen äquimolaren Menge eines mehrkernigen Aromaten der zwei durch elektrophile Substitution austauschbare Wasserstoffatome enthält,
und/oder
(b) einem mehrkernigen aromatischen Carbonsäurechlorid, das ein durch elektrophile Substitution austauschbares Wasserstoffatom besitzt und mit sich selbst kondensationsfähig ist,
sowie
(c) gegebenenfalls einem monofunktionellen Reagens zum Verschluß der Endgruppen,
B. eine Lewis-Säure in einer Menge von mindestens einem Mol pro nucleophile Gruppe im Reaktionsgemisch und zusätzlich einem kleinen Überschuß, der ausreichend ist, die Reaktion zu katalysieren,
C. gegebenenfalls eine Lewis-Base in einer Menge von 0.01 bis 4 Mol pro Mol an Säuregruppen,
D. ein unter Reaktionsbedingungen inertes Lösungsmittel,
dadurch gekennzeichnet, daß das Reaktionsgemisch in einer ersten Reaktionszone unter Rühren bis zu einer Viskosität von maximal 2000 mPa·s polykondensiert wird, und anschließend durch eine zweite, vertikale Reaktionszone in einer Pfropfenströmung mittels Gasdruck befördert und dabei fertig polykondensiert wird.

2. Verfahren nach Anspruch 1, dadurch gekennzeichnet, daß das Polykondensat aus der 2. Reaktionszone durch ein Förderaggregat, vorzugsweise durch ein horizontal angeordnetes Schneckenaggregat, kontinuierlich ausgetragen wird.

## Claims

1. A process for the preparation of a polyarylene-etherketone by Friedel-Crafts polycondensation of a reaction mixture containing
A. a monomer system of
(a) (1) an aromatic dicarboxylic acid chloride or phosgene and
(2) an essentially equimolar amount of a polynuclear aromatic which contains two hydrogen atoms exchangeable by electrophilic substitution
and/or
(b) a polynuclear aromatic carboxylic acid chloride which has a hydrogen atom exchangeable by electrophilic substitution and is capable of undergoing condensation with itself
and
(c) if necessary, a monofunctional reagent for blocking the terminal groups,
B. a Lewis acid in an amount of not less than one mole per nucleophilic group in the reaction mixture and in addition a small excess which is sufficient to catalyze the reaction,
C. if necessary, a Lewis base in an amount of from 0.01 to 4 moles per mole of acid groups and
D. a solvent which is inert under reaction conditions,
wherein the reaction mixture is subjected to polycondensation in a first reaction zone, with stirring, to a viscosity of not more than 2,000 mPa.s and is then conveyed through a second, vertical reaction zone with plug flow by means of gas pressure, where the polycondensation is completed.

2. A process as claimed in claim 1, wherein the polycondensate from the second reaction zone is discharged continuously by a conveying unit, preferably by a horizontally arranged screw unit.

## Revendications

1. Procédé de préparation de poly(arylène éther cétones) par polycondensation de Friedel-Crafts d'un mélange réactionnel, contenant
A. un système de monomères constitué de
(a) (1) un chlorure d'acide dicarboxylique aromatique ou du phosgène et
(2) une quantité essentiellement équimolaire d'un composé aromatique à plusieurs noyaux qui contient deux atomes d'hydrogène échangeables par substitution électrophile,
et/ou
(b) un chlorure d'acide carboxylique aromatique à plusieurs noyaux qui possède un atome d'hydrogène échangeable par substitution électrophile et qui est capable d'autocondensation,
de même que
(c) éventuellement un réactif monofonctionnel pour la terminaison des groupes terminaux,
B. un acide de Lewis en une quantité d'au moins une mole par groupe nucléophile dans le mélange réactionnel et en outre un léger excès qui est suffisant pour catalyser la réaction,
C. éventuellement une base de Lewis en une quantité de 0,01 à 4 moles par mole de groupes acides,
D. un solvant inerte dans les conditions de réaction,
caractérisé en ce que le mélange réactionnel dans une première zone réactionnelle est polycondensé sous agitation jusqu'à une viscosité maximale de 2.000mPa·s et en ce qu'il est ensuite transporté par une deuxième zone réactionnelle verticale en un écoulement par bouchons au moyen de pression de gaz et en ce que la polycondensation y est achevée.

2. Procédé selon la revendication 1, caractérisé en ce que le polycondensat de la deuxième zone réactionnelle est évacué de manière continue par un appareillage de transport, de préférence par un appareillage à vis disposé de manière horizontale.
